# EUROPEAN PATENT APPLICATION

(11) **EP 4 600 848 A1**
(43) Date of publication of application: **13.08.2025**
(21) Application number: 24159488.6
(22) Date of filing: 23.02.2024
(51) Int. Cl.: G06F 21/10, G06F 21/64

(54) **STORAGE SYSTEM FOR DIGITAL DATA ARCHIVES AIMED AT A SECURE EXCHANGE OF THE SAME BETWEEN ENTITIES WITH DIFFERENT RIGHTS**

(30) Priority: 08.02.2024 IT 202400002590
(71) Applicant: Net Service SpA, 40122 Bologna (BO) (IT)
(72) Inventor: MARCHESI, Lodovica, 09012 Capoterra (CA) (IT); DI FRANCESCO, Marco, 09134 CAGLIARI (IT); FOLEGANI, Enrico, 40129 BOLOGNA (IT)
(74) Representative: Conversano, Gabriele

(57) **Abstract**

In general, the field of application of the present invention concerns the topic of information trading; and indicates a platform that allows the secure trade of a digital archive, i.e., a set of information in digitized format.

The invention is based on the combined and unprecedent use of a set of enabling technologies. These are known technologies, if taken individually, but whose application potential is still partly unexplored. The fundamental principle used to achieve the purposes of the invention, in fact, consists in exploiting the characteristics of state-of-the-art tools such as "Blockchains", with their set of tools (NFTs and "Smart Contracts"), and the IPFS platform.

Between these two platforms (i.e., "Blockchain" and IPFS) and the digital archives to be traded, a new adaptation sub-platform has been inserted, developed from scratch, which on the one hand presents the data to users, and on the other allows store them using the platforms mentioned above: "Blockchain" and IPFS.

Thanks to the inclusion of this adaptation sub-platform, users are therefore able to use their analysis tools without having to update them, and can also use, as a repository of digitized archives, modern platforms that facilitate both a secure management of the data and the transfer of rights over the same.

The inventive principle, however, is not limited only to having introduced a sort of adaptation filter aimed at the custody and management of data: in fact, and this is perhaps the most interesting precaution, this adaptation sub-platform introduces an effective decoupling among the different functions involved in data processing and trading.

This decoupling is essential to make the system object of the invention usable in a completely general way for the processing of any digital archive, and also to guarantee the maintainability and evolution of the storage system as a whole.

## Description

### Technical field of the Invention

In general, the field of application of the present invention concerns the topic of the information trading and their transfer.

In fact, if on the one hand information is an asset of great value, at the same time, it is difficult to offer sufficient guarantees on its actual owner, and it is very complex to manage the ease with which copies can be made. Consequently, information trading is often limited by these factors just mentioned.

### Known art

Nowadays, a large part of information is available in the form of computer archives, i.e., digitized data that are physically stored in the memory of computers.

The digital format is convenient because it allows you to store enormous quantities of information in a small space, quantities of information which, if they were stored on other media (for example on paper files), would require large spaces for their archiving; moreover the digital format is also particularly convenient because it allows you to carry out automatic processing of the information itself: from simple research to forms of analysis of a certain complexity, which would not be possible to carry out except by running computer programs.

Therefore, at present, large quantities of data, in the form of digital archives, are already managed with massive calculation and storage systems, and are processed using computer programs.

In many cases, these computer programs are essential work tools for companies and organizations; these software programs have a significant value in themselves, not just economic, and it is not realistic to think of their generalized replacement as a consequence of decisions that involve modifying the structure of the computer archives on which these programs operate. Therefore, in the data processing landscape, it is necessary to live with technologies that are not always state of the art.

In many cases, popular storage platforms are based on technologies that cannot be easily updated maintaining the backward compatibility with popular computing technologies for data analysis and presentation.

Ultimately, the increasingly significant strategic and economic value of information, combined with the technical problems related to its management, when it is processed in IT format, is determining a scenario of growing risk in the processing of data in general: meaning that many data can be acquired, or consulted, illegally, in various forms.

Cases of illegal acquisition or consultation of information, according to most global legislation, represent acts treated as actual theft: but it is increasingly clear that the problem cannot be managed solely as the repression of a crime.

Furthermore, the right to privacy should also be guaranteed when dealing with subjects belonging to the states themselves: evidently, repression cannot represent a credible measure against such subjects.

It is necessary that the IT platforms used for the management and exchange of data guarantee security as much as possible; without delegating this guarantee to third parties.

As already mentioned, however, it is not easy to quickly introduce platforms with greater security features in current scenarios; this is because data interchange is already the basis of many activities, and data is exchanged and processed with the help of numerous consolidated and widespread software tools. These are tools which, given their diffusion, end up representing a real limiting factor in introducing new management platforms for data exchange.

In particular, this is even more true where the use of new platforms requires significant intervention on existing software tools.

Ultimately, to date, the security of IT transactions is almost always guaranteed by using traditional forms of protection, i.e., by physically and logically protecting the data, and by using subjects such as system administrators, who act as guarantors. Here security is enhanced according to the so-called "privacy by design" and "privacy by default" logics. However, as previously mentioned, it would be preferable not to have to rely on a guarantor: it would be better for the technologies themselves to offer high levels of guarantee on the safe custody of the information processed.

In fact, this last option, i.e. entrusting security to the intrinsic performance of the technologies used, is a viable option in principle, given that some technologies are now known and available, which would allow secure management of a digitized data archive. However, despite this theoretical opportunity, there are no truly reliable platforms available to support real "trading" of information. Above all, there are no platforms available that are sufficiently generic to be able to deal with trading of every type and format of information.

The following of this description briefly outlines, in a very concise way, some technologies that are the current state of the art, and are therefore theoretically available. These technologies are mentioned because the present invention is based on their use.

The first enabling technology for the present invention is the so-called "Blockchain" technology. This is a fairly complex topic (at least for the complexity of the algorithms underlying its implementation), but which, from an application point of view, can be summarized in a simple way, defining what kind of services it supports and what the distinctive characteristics of these services. For exhaustive insights into "Blockchain" technology (literally "chain of blocks"), please refer to the vast literature on the subject.

In a nutshell, a "Blockchain" is a distributed system in which various nodes participate. It has three types of access: reading, writing (sending valid transactions) and consensus (defining the blocks to add to the "Blockchain"); there is no access for deleting or removing a block: if it were necessary to delete some content previously inserted in a "Blockchain", this action is replaced by writing a new block, containing information corresponding to the cancellation of other information previously entered (but the latter still physically remain in the "Blockchain").

Depending on the access permissions granted to the various users, different types of "Blockchain" can be defined.

In a "Public Blockchain", anyone can perform all three types of access.

In a "Permissioned Blockchain", the nodes belong to one or more organizations, which manage the consensus operations (i.e., the third type of access); and new consensus participants can be accepted with the "permission" of those who own the "Blockchain".

In a "Public Access Blockchain", reading and writing operations are allowed to everyone. In the case in which a "Public Access Blockchain" is a "Public Blockchain" this is true by construction, while in "Permissioned Blockchains", it is the owners of the "Blockchain" who grant everyone such access to the nodes of the "Blockchain".

In both cases, the writing of the "Blockchain" may still be subject to conditions, such as, for example, the payment of a commission or the membership of a list of authorized persons, enabled to carry out specific operations.

As a result of the consensus mechanisms, which regulate writing operations, a "Blockchain" can therefore be seen as a distributed computer archive that allows any authorized person to archive his own content; the main prerogative of this archiving is that of being irreversible and unchangeable. The distinctive thing, compared to other means of archiving, is given by the fact that irreversibility and immutability are guaranteed by the technology itself and not by an external subject who holds the function of guarantor: it can be assumed that the guarantees offered by a "Blockchain" at the state of the art are make it substantially incorruptible; and this prerogative is made possible by an original use of data encryption and decryption techniques, i.e. techniques that are known but always evolving, and whose use often requires the use of enormous computing power.

Without going into the details of the various known implementations of "Blockchain", it is noted that, evidently, there can be an indeterminate number of "Blockchains", each characterized by its own programs (i.e., algorithms) which are used to implement the actions of loading a content and its validation.

The loading is carried out by the subject who owns the content, while the validation is carried out by a community of other subjects, i.e., the subjects who are responsible for producing the so-called consent, who, in general, are not coordinated with each other and who, through their consent action, make the upload technically irreversible and unchangeable.

Each "Blockchain" is therefore made up of a set of algorithms and a community of users. These algorithms are implemented in programs executed on the machines of those who maintain the "Blockchain", i.e., the community of users which, in a typical public "Blockchain" context, is a community that forms spontaneously without being coordinated: the users, in fact, are those who keep the "Blockchain" alive thanks to the exercise of their consensus actions.

It can therefore be understood how a "Blockchain", realistically, is subject to a single major risk, namely the risk of being abandoned by users; however, the larger the community of its users, the more the risk is reduced, until it becomes essentially zero risk, when a "Blockchain" becomes very large and popular.

It is due to the criticality of keeping "Blockchains" alive that some of these, called "Permissioned Blockchains", are based on a non-spontaneous community of users, with new users who can only be added with the permission of existing ones.

In this case, their maintenance can be guaranteed, but the characteristic which consists in offering an intrinsic guarantee is lost (or at least reduced): in this case, in fact, the community of users can be coordinated, and therefore potentially corruptible. Even in this case, however, the greater the number of independent users who participate, the lower the risk of collusion and corruption. Furthermore, it is possible to periodically "anchor" the last block of information validated in the "Permissioned Blockchain" within a public blockchain. This makes the "permissioned Blockchain" as unalterable as the public one to which it is anchored.

In any case, some public "Blockchains" exist, they are widespread, stable and reliable; these "Blockchains" offer storage performance that can be assumed to be truly irreversible and immutable.

An important example of a "Blockchain of this type is the "Blockchain" known as "Ethereum", on which some particular contents are defined. In fact, although, in theory, a user can upload any type of file to a "Blockchain", it is also true that some types of content are those for which the "Blockchain" was designed, and therefore it will be more efficient in processing such data. Specifically, the Ethereum "Blockchain" is very suitable for storing a particular type of "rare" and "characteristic" content, which can be managed through so-called NFTs (Non-Fungible Tokens). Obviously, the concept of NFT is generalizable and it is not specific to the Ethereum "Blockchain", but, as mentioned, in this "Blockchain", its processing is managed with particular efficiency. An NFT is nothing more than a sort of "recording" with unique characteristics, in which the person who generated it is known; the characteristic properties of a NFT are certified and, in theory, they are verifiable at any time even by users third parties.

Ultimately, an NFT is a non-copyable and non-modifiable document, therefore a unique document in the strict sense, but transferable from one owner to another, and uniquely associated with another file, of which it contains a "hash"; consequently, the possession of an NFT can represent a sort of ownership deed of the file to which it is associated, as well as a certificate of authenticity of the file to which it is associated. In particular, to place the development of these NFTs in an application context, we observe how NFTs were initially conceived and developed above all to protect the ownership and "copyright" of digital works of art; and this is still one of the main applications, if not the main application, of these NFTs.

In summary, "Blockchains" are a form of well-known archive that would guarantee the transaction security of the data stored in such an archive, but they do not offer a general solution, suitable for physically archiving every type of digital archive. Furthermore, the format of the stored data itself is significantly influenced by the "Blockchain" used.

Therefore, although "Blockchain" technology can satisfy some of the requirements required to implement a platform to support the secure trading of data in the form of computer archives, "Blockchains", as such, cannot represent the direct solution to all problems posed by so-called information trading. Above all, they do not provide a solution with the necessary degree of generality.

Another emerging technology, and very useful for providing efficient storage of information in digital format, is constituted by distributed archiving techniques, made possible by the growing diffusion and capillarity of computers connected to the public network.

These technologies were initially created to store, and above all to efficiently share online, very large files: an example are the so-called "*torrent* files".

The state of the art has then evolved constantly, and today there are real platforms available, free and public, suitable for the "upload" (storage) and the "download" (recovery) of data, including data of very large dimensions.

In particular, the so-called IPFS (*InterPlanetary* File System) platform, although very recently established, is an example of a platform of this type, and it is already an efficient and suitable tool for public archiving of generic data (in any form).

Therefore, entire data archives, or parts of them, can certainly be uploaded and downloaded on the IPFS: these archives can be of any format, and can be both unencrypted data and appropriately encrypted data.

The IPFS platform is therefore also a candidate to be used to implement a platform for secure data trading; brings with it some features suitable for implementing a data trading platform, but it does not offer any tools to guarantee security in transactions, in the sense illustrated previously.

The technologies briefly exposed above are certainly interesting because they are suitable for developing applications that allow the processing of data sets while guaranteeing their integrity. Furthermore, they are also technologies that allow you to regulate the fact that certain data are accessible and manipulated only by subjects who have appropriate rights; which can be implemented by managing appropriate encryption techniques (also in this case known techniques can be used).

Therefore, it is theoretically possible to have very effective tools available, suitable for creating IT platforms capable of ensuring that the modification or consultation of certain data is permitted only to subjects who have appropriate rights. Furthermore, and in any case, it is possible to ensure that the changes made (additions, deletions, transfers of rights, etc.) can always be made reliably traceable, so as to always be able to trace the data as they were before its modification. However, despite the availability of these very powerful and effective technologies, in the real world, from a technical point of view, the exchanges of data continue to pose a number of issues that hinder the safe trading of information.

In particular, the person who buys exclusive rights on certain information contained in a database cannot be certain that the selling person will not sell the same data to another person: in practice, the exclusive transfer is not easily manageable.

But it is above all the sale of non-exclusive rights on data that is difficult to manage: consider the case of a buyer who acquires, for his own use, but not with exclusive rights, a certain database, and acquires it from a seller who bases its commercial activity on the sale of such data; well, this person who acquired the database for his own use could then resell or transfer it to another person, damaging the first seller. This eventuality must also be managed to encourage fair trade in databases.

In general, the exchange of databases requires a platform that offers great guarantees of transparency as well as data protection.

The general problem is further complicated by the fact that the data to be traded must also be navigable, given that buyers must be able to ascertain their availability, as well as they must be processed with existing IT tools, and must therefore be able to maintain their original structure. The achievement of this objective appears increasingly indispensable, both to extend the classic commercial mechanisms, which are commonly applied for the exchange of other goods, also to the exchange of information collected in digitized databases (after all, data is a good at all effects, and moreover an increasingly precious asset), both to make the exchange of sensitive information possible and reliable, where the important thing is to have guarantees that certain data does not end up in the availability of unauthorized parties.

### Purpose and Summary of the Invention

The general purpose of the present invention is to provide a platform that allows the secure trading of a digital archive, i.e., a set of information in digitized format.

Furthermore, given that today, despite accepting various types of risks, data transfer is already managed in some way, it is appropriate that the teachings of the invention do not provide for the introduction of a platform with a strong impact on the software tools that are already currently (and widely) widespread.

On the contrary, the platform will have to allow currently active users to continue using the software tools they already routinely use to process a lot of data. In fact, it is not realistically possible to impose a generalized update of existing and widespread software tools.

In particular, the platform according to the invention must be suitable both for managing the sale of all rights on the data, i.e., making the buyer the new owner of the data themselves, and for the simple right of use of some data, without any transfer of ownership, and leaving the copyright with the original owner.

Finally, the platform according to the invention must support the execution of appropriate searches that allow a general user to know whether the content of the information contained in a digital database, on which no rights have yet been acquired, are or are not those of interest to him, so that he can proceed with the acquisition request with awareness.

The objectives set for this invention are achieved through the use of a storage system of digitized archives, which includes public-access existing archiving platforms, including at least:
- a platform in "Blockchain" technology,
- a platform in "IPFS-type" technology;
and said storage system of digitized archives is characterized in that it also includes a private adaptation sub-platform, i.e. a sub-platform with regulated access, configured so that the use and access to said existing platforms with public access always takes place via services offered by said private adaptation sub-platform, which is configured to offer its services through the execution of appropriate coordination software programs, executable on a hardware system suitable for the purpose, and included in said private adaptation sub-platform.

Preferably, but not necessarily, said hardware system suitable for the execution of said coordination software programs can be made up, even physically, of private machines; in any case, this system is accessible exclusively by a predetermined group of users, and all access must take place through registration. Once registered, the users access this private adaptation sub-platform, and only through it they operate on the two public access platforms.

And said coordination software programs include at least programs, configured to offer the following services:
- an interface service for requesting the acquisition of rights on the data uploaded to said platform in "IPFS-type" technology;
- a service for supporting the purchase of these rights, selected by means of the service indicated in the previous point, through the generation of "Smart Contracts" which contain the terms of the transaction, and being said "Smart Contracts" stored on said public access platform in "Blockchain" technology;
- a service for generating NFT associated with data contained in digitized archives kept in said storage system;
- a service for assigning said NFTs to users of said storage system, said NFTs being generated as an effect of the transactions formulated in a "Smart Contract";
- an interface service for accessing the data uploaded to said platform in "IPFS-type" technology and for downloading them from it, this access being limited, depending on the rights registered in the NFTs held by the users who perform said access;
- a service for offering a user interface to perform the encryption of a digitized archive, or a part of it, to be uploaded to said platform in "IPFS-type" technology;
- a service for offering a user interface to decrypt data downloaded from said platform in "IPFS-type" technology.

The main advantage of the present invention consists in the fact that its teachings allow the implementation of a real repository for digital archives, which satisfies all the main requirements for which the invention itself was developed.

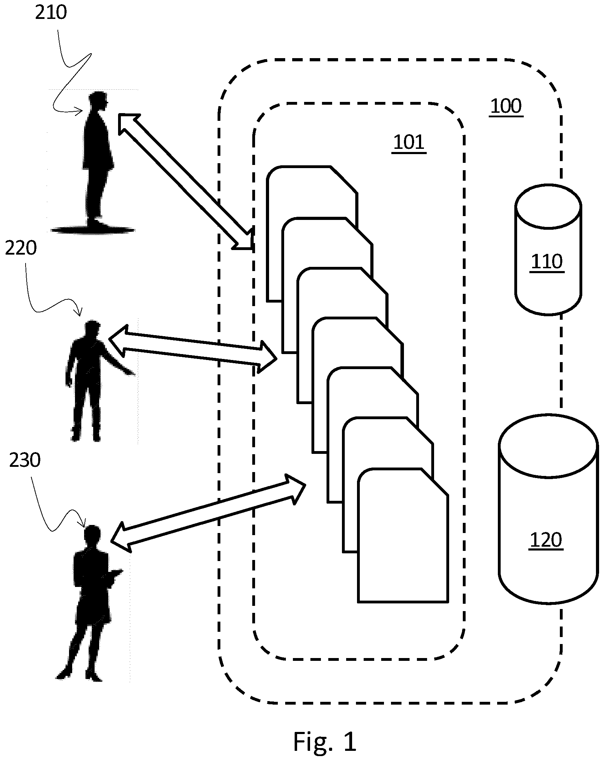

This invention also presents further advantages, which will be more evident from the following description, which illustrates further details of the invention itself through some forms of implementation, from the attached claims, which form an integral part of the present description and from the attached Figure 1, in which there, is shown in a schematic and simplified way, a high-level architecture of the digitalized archive storage system according to the invention.

Effectively, the objectives of the invention are achieved by activating quite various processes that take place by invoking services made available by this adaptation sub-platform, which, in turn, constitutes the heart of the storage system, since it ensures the effective coordination of the services offered from the two public access platforms.

The services listed briefly in the summary description proposed above are just some of those that the private adaptation sub-platform guarantees, and, alone, they do not allow us to offer a reconstruction of the various trading processes that the system supports: after all, the the invention is not an invention of a method, as it is possible to implement many information trading methods.

The invention is instead a system invention, in which the proposed system is characterized by the fact that it presents a particular architecture, which will be better described below. Such system allows the creation of an information trading platform that can be used by many different subjects; i.e., subjects having the most varied needs, and who wish to trade information of all kinds, and structured in every possible way.

### Detailed Description

The invention is based on the combined and unprecedented use of a set of enabling technologies. These are known technologies, if taken individually, but whose application potential is still partly unexplored.

In particular, two different platforms were exploited used as a data repository: a first platform based on the so-called "Blockchain" technology and a second platform based on a public and distributed storage technology; the so-called IPFS (InterPlanetary File System) technology constitutes an emblematic example, representative of such distributed storage platforms, and it is the reference platform that was actually used to create, and test, the first form of implementation, albeit prototype, of the present invention.

Both of these technologies, as regards the essential aspects to define the invention, have been described in the first part of this description.

The "Blockchain" platform, not being efficient for storing large quantities of data, has been exploited to store only a limited quantity of data. In particular, if the objective is to process a large digitized archive, the data that is stored in the "Blockchain" must be much smaller, and specifically is limited to containing a fairly short "hash" of such data, as well as some other generic information that concerns the data (but is not part of the data itself).

The data in its entirety, however, is stored in an IPFS-type platform, which is much more suitable for this purpose.

Note that the presence of information that contains a "hash" of a very large archive allows, in any case, to detect whether this very large archive has undergone a modification. Consequently, being a "hash" that can be uniquely associated with a very large archive, the storage of this digital archive on an IPFS platform inherits, with respect to the risk of manipulation, the same security as the "hash" associated with it, which is archived on the "Blockchain", therefore in an environment that must be considered immune to malicious data manipulation. In fact, in the current state of technology, the security of the so-called "public blockchains", or "permissioned", as long as they are anchored to a "public blockchain", can be considered substantially absolute.

Another important technology which was exploited to implement the present invention is closely linked to the "Blockchain" technology: this is the technology of the so-called NFT (Non-Fungible Token).

NFTs, as regards the aspects necessary to define the invention, have also been introduced in the first part of this description.

As already mentioned, the concept of NFT is a fairly general concept and can be implemented in various ways (there are standards that serve to generate such NFTs). All forms of NFT implementations can, in turn, be used to implement the present invention as a whole; however, the first form of implementation of the invention, having to be based on a stable "Blockchain", and now available for applications of this type, made use of the NFTs defined within the *Ethereum* "Blockchain", which follow the standards known as ERC -721 and ERC-1155.

Possession of an NFT serves as proof of possession, or more generally of a right, to the data to which it is associated. And the possession of an NFT by a subject is guaranteed within a "Blockchain" by an intelligent and reliable contract (in the jargon of the blockchains: a "Smart Contract"). Even the so-called "Smart Contracts" are documents (i.e., portions of information) that lend themselves to being archived on "Blockchain", and in particular on compatible *Ethereum* "Blockchains".

The set of control mechanisms implemented in the "Blockchain" guarantees the impossibility of counterfeiting a contract (i.e., a "Smart Contract"), as well as the impossibility of its replacement: in other words, it is not possible to falsify a contract, nor make a valid copy; and this contract may contain information about a transfer of ownership, or rights in general, on a digitized archive. Therefore, the transfer takes place through the corresponding transfer of the NFT to which the archive in question is associated; an association which, please note, can be implemented with certainty, given that the exchanged NFT contains a "hash" of the archive.

In transactions, the data as such, stored in the public IPFS platform, are theoretically not even touched: everything needed to finalize the transaction, whatever it may be, takes place at "Blockchain" platform level.

From what has been said so far, it appears that the invention is structurally conceived so as not to interfere with the formal structure of the digital archives processed, and consequently does not have an impact on the tools with which such data are managed (once they are made available to a person who holds the necessary rights).

In fact, a generic archive is processed, as it is structured, in a local and private environment, where it is decrypted by those who have the right, because they have the decryption keys, and when the archive is not used, it is encrypted again and transferred in an IPFS type platform. Please note that, in this way, the encryption/decryption keys can be left (and so must be done) in the exclusive availability of the subject, or subjects entitled, and are not stored either in the IPFS platform, where resides only data encrypted (or partially encrypted, as will be clarified later), nor in the private environment in which the data is processed, and where the software modules through which properties of the "Blockchain" and the IPFS platform are exploited are executed. In summary, the encryption and decryption keys are never stored in the platform as a whole. Therefore, although digital archives are stored on a potentially hackable platform such as the IPFS technology platform, they are unusable as they are always encrypted with encryption keys that cannot be found anywhere on the custody platform as a whole. Furthermore, even any attempts to manipulate the encrypted archive (for example the deletion of some part of it, even a small one) would be highlighted during the consultation, as such consultation is only possible by subjects in possession of an appropriate NFT who, in turn, contains a "hash" of the uncorrupted archive.

Already from these first considerations emerges the fundamental principle that was used to achieve the purposes of the invention, which consists in exploiting the characteristics of state-of-the-art tools such as "Blockchains", with their set of tools (NFT and "Smart Contract"), and the IPFS platform.

In fact, between these two platforms (i.e., "Blockchain" and IPFS) and the digital archives a new adaptation sub-platform has been inserted which on the one hand presents the data to users in the form that they are equipped to process, and on the other allows you to store them using the platforms mentioned above: "Blockchain" and IPFS.

Thanks to the inclusion of this adaptation sub-platform, users are therefore able to use their analysis tools without having to update them, and can also use, as a repository of digitized archives, modern platforms that facilitate both security management of the data and the transfer of rights over the same.

The inventive principle, however, is not limited only to having introduced a sort of adaptation filter aimed at the effective custody of the data: in fact, and this is perhaps the most interesting achievement, this adaptation sub-platform introduces an effective decoupling between the different functions involved in data processing and trading.

In this regard, it is underlined that the overall custody platform, i.e. the complete system that includes the "Blockchain" and IPFS platforms, but also the so-called adaptation sub-platform (each of these platforms being accompanied by its own programs which allow their use), allows a clear separation between all the problems inherent to transfers of ownership, or transfers of rights in general, from the problem of safely storing the data, so that they can be searched for, recovered, analyzed, manipulated and archived by subjects who are authorized to do so.

This decoupling was achieved by treating the data as such, in a coordinated but distinct way, separating them from the corresponding NFTs.
- The data as such, i.e., the digitized archives, are managed through encryption and decryption functions, as well as through appropriate functions for uploading and downloading them, to and from an IPFS-type platform;
- Ownership and use rights, instead, are managed on a separate platform in "Blockchain" technology, i.e., a very efficient platform for carrying out these functions.

Coordination between all these functions is guaranteed by the fact that the NFTs processed in the context of transfers of rights are uniquely (and absolutely reliably) associated with the digitized archives, of which they certify ownership. And the ownership of each NFT is regulated, once again with the utmost reliability, by appropriate "Smart Contracts", which, consequently, also regulate the rights on the data themselves.

In principle, and in the preferred forms of implementation, the decoupling we are talking about
✔ is based on the fact that every single action that users carry out using the storage system according to the invention is performed by invoking a particular service provided by the adaptation sub-platform; and
✔ materializes on the fact that:
   - each service that involves the use of data stored in the "IPFS-type" distributed platform does not manipulate NFTs or "Smart contracts" stored in the "Blockchain" technology platform, but it is just limited to consulting them, and
   - each service that involves the manipulation of an NFT or a "Smart contract" does not manipulate or transfer data stored, or intended to be stored, in the distributed platform in "IPFS-type" technology.

The system according to the invention allows to guarantee a further performance of great importance, namely the possibility of making the data stored on the IPFS suitable for supporting various forms of research, allowing subjects who have not yet acquired any rights on the use of certain archives, to carry out some searches on these archives.

Even with respect to this performance it is possible to act through the implementation of appropriate functions that can be performed at the level of the so-called adaptation sub-platform. In fact, it has been said that only at the level of this sub-platform the data contained in a digitized archive can be processed in clear text, but just by their owner (or by the subject who have the right to); while users potentially interested in such data can only access them in their publicly accessible unencrypted form.

Given that the data stored on the IPFS platform in encrypted form are not readable, the problem arises for a user, who still does not have rights over them, to verify whether the content of such data is that of his interest.

This problem, i.e., the problem of supporting adequate data consultation in order to carry out a search for the data to be acquired, can be easily solved thanks to the data management structure implemented within the system of custody, and which is envisaged by the present invention.

In fact, the owner of the data, who can process them at the level of the adaptation sub-platform, can decide to disclose some contents of his digitized archive, to make these visible for potential buyers, so that they can decide whether or not to acquire complete information; acquisition which will take place through the generation or assignment of a corresponding NFT.

For example, for data in tabular format, the seller can choose to disclose a subset or to disclose only the structure of the table and a description of its fields, or some rows or columns.

Some further clarifications will be provided below, on the way in which the invention allows the production of data that can be consulted in clear text.

Figure 1 shows an overview of the storage system for digitalized archives according to the invention. With the number 100, in Figure 1, we intend to indicate the entire storage system; it includes two existing platforms, which are, to all intents and purposes, part of the system of custody of digitized archives 100 according to the invention, but they are also platforms with public access, widely available to any user, therefore not only to users who use the storage system 100 for digitized archives according to the invention. For this reason, they are graphically represented so that they protrude towards the outside of the storage system 100 according to the invention.

Said two platforms are a public access "Blockchain", indicated with the number 110, and a distributed public archive of the IPFS type, indicated with the number 120. Both said "Blockchain" 110 and said distributed public archive 120 are intended with all their set of primitives that allow their effective use, fully exploiting their distinctive prerogatives mentioned previously.

The storage system 100 also includes a further adaptation sub-system, indicated with the number 101, which implements the environment in which the users of the storage system 100 operate, so as to exploit in a substantially transparent way the performances offered by the public access platforms 110 and 120. Therefore, the users of the storage system 100 always access it via said adaptation sub-system 101.

Figure 1 then shows some typical users of the storage system 100 of digitized archives, according to the invention.

In particular, Figure 1 highlights three types of users:
✔ the number 210 indicates a potential buyer of information,
✔ the number 220 indicates a user of the information, i.e., a user who has some rights to use the information contained in the digitized archive kept in the storage system 100 according to the invention,
✔ finally, the number 230 indicates the owner of the digitized archive, i.e., a user of the system 100 who owns the digitized archive, and can sell it "in its entirety" (thus losing possession), or can simply sell rights of use to other users.

In the following, there will be described some trading activities that these types of users can carry on by operating on the storage system 100, and, in particular, by using services made available to them by the adaptation sub-system 101, which, remember, is a protected system in a private environment, which can therefore be used by registered users, enabled to access it.

Therefore, said adaptation sub-system 101 is a private IT platform, comprising hardware sized to cope with the quantity of users who are expected to be served, and configured to perform a plurality of services, obviously implemented with appropriate software programs, adapted to be invoked by various users.

In Figure 1, said services are represented as a plurality of distinct cards, in order to highlight the substantial decoupling of these services each other's: this last characteristic offers excellent advantages in the general maintenance of the storage system 100, and facilitates its evolution. In fact, both the implementation of the first version of the invention and its evolutions were carried on (and so may continue in the future) using "*Agile*" development methodologies, also facilitated by the fact that the structure of the system as a whole naturally favors the adoption of these methodologies.

Said owner 230, evidently, must be able to do substantially everything on his data. He will therefore be able, first of all, to upload his own digitized archive into the storage system 100; and to do this he will invoke a service to encrypt his data.

At this point it is useful to remember how the adaptation sub-system 101, in the different forms of implementation, is configured to offer a plurality of services; these services being offered through computing means, in turn configured to run appropriate software programs.

Specifically, encryption services can be performed, in theory, both on computing means made available by the general storage platform, i.e., by the adaptation sub-system 101, and on computing means belonging to the user.

This second implementation option is preferable, and it is therefore recommended, because it allows to guarantee that the unencrypted information can only reside on machines under the total responsibility of the user; while on shared machines and, as such, accessible to different users, only encrypted data passes.

It is clear that the teachings of the invention make it possible to offer very high-level security guarantees, given that the encrypted data can only be deciphered by entitled subjects (because they are in possession of the decryption keys). Moreover, if the decryption and encryption services are physically performed on the machines of the user who is using the data, there is the further guarantee of security given by the fact that no unencrypted data ever resides (not even in protected areas) in machines potentially open to public access.

Furthermore, in the encryption operation carried on by the user 230, who owns the data, the encryption service offers some further performances, which are specific to the solution taught in the present invention. In particular, among the various things it does, the service allows you to "*tokenize*" the digitized archive and independently encrypt each part of it, possibly leaving some parts clear, such as the labels of the data structure, some fields of each records, or other information selectable by the owner 230 himself according to his own discretion.

In other words, the encryption action maintains the structure of the initial digital archive, and allows you to offer a certain visibility of this structure even after the archive has been encrypted. It is also noted that the storage system 100 does not place any constraints on the structure of the digitized archive, nor on the flexibility with which to "*tokenize*" the archive.

Therefore, the service offered through said private adaptation sub-platform 101, intended to allow the user to carry out the encryption of a digitized archive, or a part of it, in his preferred implementation forms, also envisages offering an appropriate user interface to allow the latter to define the structure of the data which must remain evident even after encryption.

In particular, in said preferred implementation forms, separate encryption of data subsets is permitted; and the separation logics can be decided by the user who performs the encryption. This possibility of encryption control allows the maintenance of a certain structure of the data, even when they are in their encrypted form, and represents a simple and very effective measure to allow partial extractions, and consequent partial decryptions, from the encrypted digitized archive.

Furthermore, in preferred implementation forms, in parallel with the encryption of the digital archive, which must always precede its storage in the custody system 100, or in the distributed archive 120, an unencrypted file is also created, navigable and physically separated from the complete archive: and this clear, navigable file represents a reduced image of the overall archive. The function of this unencrypted file is to always make visible some information needed by a user interested in the data of the overall archive, to which this file is associated.

By navigating within this unencrypted file, a generic user is able to verify the actual presence of the information of interest to him. For example, this file can contain the structure of the tables and databases contained in the archive, as well as the values of one or more fields of each record, or other information decided by the user who performs the encryption. The availability of this file in clear text is a simple tool to offer to potential buyers, in order to facilitate them in selecting the records of their interest and to allow them to actually purchase and extract only the information they need.

In general, the quantity and the form of the information contained in this unencrypted file depend on the sales strategy that the owner of the digital archive wants to adopt; therefore, each digital archive can be associated with different reduced images, i.e, different clear files associated with it.

Evidently, the so-called "*tokenization*" of the encrypted archive must maintain a certain consistency with the clear file which is made navigable for potential customers: in other words, it is appropriate that everything that can be selected at the clear file level is also selectable in terms of extraction from the encrypted file.

However, it is clear that, in very large and complex archives, it is not reasonable to exactly accept requests for extremely punctual extractions, because it would be necessary to separately encrypt every elementary information contained in the archive. Therefore, the services responsible for selecting the information to be extracted must transform the user's requests into extraction operations from the encrypted archive: which extractions, in general, will concern a superset of the information requested by the user.

Another very important thing, that the owner 230 needs, is the certification of ownership of his archive. To do this, he will invoke a specific service of the adaptation sub-system 101, with which he will generate an NFT, and will uniquely associate it with his digital archive. This NFT, kept in the "Blockchain" 110, will in turn be uniquely assigned to its owner, i.e., the user 230: in this way it will certify that he is the owner of the digitized archive, uniquely associated with the NFT.

The owner 230 of the digitized archive, suitably encrypted, and associated with the NFT which certifies his ownership, can now simply upload his files into the distributed platform 120, using, once again, a specific service provided by the adaptation sub-system 101. At this point, the owner 230 is in the position to trade his data with the users who request it, who will access the storage system 100, upon registration.

When a potential buyer of information 210 intends to access the distributed platform 120, in search of information of interest to him, he will also act through a service rendered by the adaptation sub-system 101, having registered himself in the storage system 100.

Said potential buyer of information 210, thanks to a specific service, will be able to navigate in search of the data of his interest contained in the digitized archive owned by the owner 230, who will be able to demonstrate the ownership by showing his NFT which certifies it.

The potential buyer of information 210, not having any rights on the information contained in the digitized archive, will only be able to see the information that is available in clear text, and, on the basis of this, he will be able to request to purchase some rights on the information of interest to him, in order to be entitled to use them.

Appropriate negotiation services will be able to assist the potential buyer of information210, so that he can forward his request and pay accordingly. Once the agreement has been reached (and the amount due has been paid), another service offered by the adaptation sub-system 101 will update a "*Smart Contract*" drawn up at the time to certify ownership of the NFT.

Said contractual update will therefore be the tool with which to regulate the transaction between the potential buyer of information 210 and the owner 230, recording on the NFT associated with the digitized archive involved in the transaction the right purchased by the potential buyer of information 210, who, to this point, he will no longer be a potential buyer, but will be a real user, like the information user 220 shown in Figure 1.

The transaction also involves that, in some way, the owner 230 provides the potential user 210, who has now become to all intents and purposes a user 220, the keys for decrypting and encrypting the information to be used by the real user 220.

Once again, an important aspect of the described procedure is highlighted: the encryption keys are provided (it is possible to provide them in various ways) through direct contact between the owner and the user, and only these two subjects have access to them; the keys can therefore be managed without any need for them to be stored in the storage system 100 (in any of its parts).

The user of the information 220 is therefore in a position to read some encrypted information present in the digitized archive that the owner 230 has loaded into the storage system 100, and more precisely into a distributed archive 120.

We now go over, in broad terms, how the user 220 can use the information.

The user 220 too must access (always upon registration) the storage system 100 through a service provided by the adaptation sub-system 101. This service will verify, by consulting the NFT of the user 220, and the related "*Smart Contract*", which information can be downloaded from the distributed platform 120, and will provide a copy of it, via an appropriate interface, to the user 220, who is capable of decrypting them, as he is in possession of the necessary decryption keys. Therefore, the information is in clear text only in the interface reserved for user 220, who can use it for his own purposes.

In this case too, it is envisaged that this interface service, where the user 220 receives the data requested by him, and to which he is entitled, is a service performed on a machine owned by the user (who is responsible for it). In this way, the data is decrypted in a separate machine, which can only be physically accessed by the user 220, or in any case only by subjects for whom the user 220 is responsible.

When the user 220 has finished the consultation, the unencrypted information can be destroyed by the service that presented it to the user 220 or by another specific service.

The storage system 100, thanks to its very versatile architecture, can then also manage more complex cases, such as the case in which the user 220 can carry out updates on the data. In this case, a service must be invoked for this purpose, configured to support the user 220 who updates some data, to allow the encryption of the updated data, using the keys held by the user 220, and to upload such updates into the distributed platform 120.

This service obviously must also carry out all the operations to maintain the coherence of all possible NFTs associated with the archive that has been updated, given that all users who have rights on that digitized archive must obviously be able to access the updated data.

It is clear that the storage systems in which the digitized archives can be updated by various users 220, as well as by the owner 230, require that the adaptation sub-system 101 is set up to offer a series of fairly complex services, given that each time that the digitized archive undergoes changes, it is potentially necessary to update several NFTs. These procedures are not the specific object of the present invention, but are mentioned here only to highlight that the architecture of the custody system 100 is suitable to also support this application case.

A final case that is mentioned in this description concerns the case in which the owner 230 cedes his digitalized archive "in full". This is the simplest case, as the transfer of the entire archive corresponds to the transfer of the NFT which certifies ownership. In this case, it is a question of applying the same methodology that is used when transferring ownership of digital works of art (which must be understood as unique pieces). In fact, the management of this case, being attributable to a typology of known transactions, would not require the teachings of the present invention. However, the invention has a high degree of generality and versatility, and easily handles this case too. The teachings of the invention are instead essential for managing in general all other forms of transactions, and in particular transactions involving mere rights of use, configurable with any criteria.

Finally, it should be noted that the storage system 100 according to the invention is also very effective for managing time or quantity contracts.

In fact, given that every download of information is always intermediated by a specific service, and given that this service verifies the rights of the user who requested it every time, it is immediate to verify the terms of validity even on time or quantity contracts, or contracts based on any other criteria.

Ultimately, having indicated an adaptation sub-system 101, in turn configured to perform a plurality of services well decoupled from each other, not only facilitates the development and the evolution of the storage system 100, but also allows to create a system suitable for storing an almost infinite range of digitized archives, on which it is possible to build any commercial scheme aimed at the transaction of rights on the use of the information contained therein.

With the help of Figure 1, some examples of use have been illustrated which show how it is possible to operate on the storage system 100 for digitized archive according to the invention. It is reiterated, however, that it is not a method that constitutes the object of the invention, as it is possible to implement many *information-trading* methods, so as to offer the platform to a plurality of subjects, each with their own needs.

In fact, the proposed system is characterized by a particular architecture, and not by the procedures it supports; and thanks to the proposed architecture there are no limitations to the type of information that could be marketed via the platform developed in the present invention.

### Concluding Remarks

In general, as also emerges from the previous description, the digitalized archive storage system, created according to the teachings of the present invention, lends itself to numerous implementation variations.

The description provided, in fact, highlights how the teachings are aimed at solving a complex problem by breaking it down into most focused problems, each solvable with specialized technologies for the purpose.

The solution is made possible by creating from scratch an adaptation sub-platform 101, i.e., a system composed of hardware and software that allows users to use their pre-existing tools for the processing of certain data, and which, at the same time, allows the association of digitized archives to corresponding NFTs that certify their ownership, or only the rights to their use. Furthermore, said adaptation sub-platform 101 provides the appropriate interfaces to manage the encryption of the data, so that these can be saved in a secure way (i.e., encrypted) in an efficient platform, but with public access, for the data storage.

The preferred form of implementation of the invention, i.e. the form of implementation actually developed by the inventors of the present invention, and which allowed its effectiveness to be tested, made use of a particular "Blockchain", namely the *Ethereum* "Blockchain", and to NFTs according to the standards required by this technology, as well as to a particular data storage platform, i.e. the platform known by the acronym IPFS, which, although very recently introduced, already shows performances absolutely adequate for the implementation of the present invention. However, if different alternative technologies were to establish themselves, either to implement the "Blockchain" or to implement the distributed data storage platform, the invention could evidently also be implemented using these alternative technologies, thus obtaining equivalent forms of implementation of the same invention.

Similar considerations can be conducted regarding the possibility of resorting to different encryption techniques or strategies: what matters is that the data is in its clear form only while it is in a private and appropriately protected environment, to be analyzed by the user who has the right to do so. While, when they are not used, they must always be protected by an appropriate form of encryption.

Other variations of the invention, beyond being able to implement it using different state-of-the-art technologies, may arise from the fact that the inventive principles can be applied in different contexts.

In general, in fact, the invention lends itself to providing a platform for the trading of any type of digital archive; however, if the application refers to the exchange of data used in a very specific application sector, the fact of having an adaptation sub-platform, which constitutes the only place where the data can be freely manipulated (but in any case within limits of specific predefined and pre-definable rights), can constitute a factor to be exploited to also integrate other functions, useful for the specific application.

Therefore, in such contexts, more limited and defined, the invention could be enriched with further details, giving rise to new forms of implementation including further developments, which could be made by the expert in the field without thereby departing from the scope of the invention, as it results from this description and from the here attached claims, which constitute an integral part of the description itself.

In fact, the inventive activity, in the case of the present invention, has been profuse to offer a typology of systems for the custody of digital archives suitable for conveniently exploiting a plurality of technologies, while maintaining each of the various functions suitably decoupled, so as to be able to evolve the platform as a whole without the mutual impacts being the cause of limitations to the evolutions themselves.

That is, it is possible to accept that a sub-platform that makes up the entire system 100 evolves autonomously, even in its specific functions that are necessary to support efficient information trading: it is then possible to eventually replace one "Blockchain" with another, or one distributed archive with another, without having to face particular difficulties to manage mutual impacts between the various functionalities implemented in the adaptation sub-system 101.

This is, ultimately, the main reason why the invention actually lends itself to so many possible variations. Some of these innumerable variations may offer further advantages compared to those already mentioned, and may also give rise to the development of various improvements which, in turn, may require the definition of further accessory elements, not necessarily already identified in the present description.

The invention is therefore susceptible to interesting evolutionary efforts, which, if not included in the present description, may be the subject of further patent applications associated with the present invention.

## Claims

1. A storage system (100) of digitized archives, which includes existing archiving platforms, with public access, which includes at least:
i. a platform in "Blockchain" technology (110),
ii. a platform in "IPFS-type" technology (120);
and said storage system (100) of digitized archives is **characterized in that** it also includes
iii. a private adaptation sub-platform (101), i.e. a sub-platform with regulated access, configured so that the use and access to said existing platforms (110 and 120) with public access always takes place via services offered by said private adaptation sub-platform (101),
and said private adaptation sub-platform (101) is configured to offer its services through the execution of appropriate coordination software programs, executable on a hardware system suitable for the purpose, and included in said private adaptation sub-platform (101);
and said coordination software programs include at least programs, configured to offer the following services:
a) an interface service for requesting the acquisition of rights on the data uploaded to said platform in "IPFS-type" technology (120);
b) a service for supporting the purchase of these rights, selected by means of the service indicated in the previous point "a)", through the generation of "Smart Contracts" which contain the terms of the transaction, and being said "Smart Contracts" stored on said public access platform in "Blockchain" technology (110);
c) a service for generating NFT associated with data contained in digitized archives kept in said storage system (100),
d) a service for assigning said NFTs to users of said storage system (100), said NFTs being generated as an effect of the transactions formulated in a "Smart Contract",
e) an interface service for accessing the data uploaded to said platform in "IPFS-type" technology (120) and for downloading them from it, this access being limited, depending on the rights registered in the NFTs held by the users who perform said access;
f) a service for offering a user interface to perform the encryption of a digitized archive, or a part of it, to be uploaded to said platform in "IPFS-type" technology (120);
g) a service for offering a user interface to decrypt data downloaded from said platform in "IPFS-type" technology (120).

2. Storage system (100) of digitized archives according to claim 1, wherein said service, indicated in the previous point "f)", which offers a user interface to perform data encryption, is configured to also offer an interface that allows the user to define the data structure that must be maintained even after the encryption, in order to allow partial extractions and consequent partial decryptions from the digitized archive subjected to encryption.

3. Storage system (100) of digitized archives according to claim 1, wherein said hardware system suitable for the execution of said coordination software programs is also made up of private machines, accessible exclusively by a predetermined group of users, and among said private machines there are also some machines for the exclusive use of the individual users of said storage system (100).

4. Storage system (100) of digitized archives according to claim 1, wherein said "Blockchain" technology platform (110) is an Ethereum compatible "Blockchain", and said NFTs, treated therein, are generated according to the standards known as ERC- 721 and ERC-1155.

5. Storage system (100) of digitized archives according to claim 1, wherein:
- each service that involves the use of data stored in the "IPFS-type" distributed platform (120) does not manipulate NFTs or "Smart contracts" stored in the "Blockchain" technology platform (110), but it is just limited to consulting them, and
- each service that involves the manipulation of an NFT or a "Smart contract" does not manipulate or transfer data stored, or intended to be stored, in the distributed platform in "IPFS-type" technology (120).

6. Storage system (100) of digitized archives according to claim 1, wherein said coordination software programs also include a program which implement a service which, in parallel with the encryption of the digital archive, aimed at its storage in the "IPFS-type" technology platform (120), is also configured to generate an "unencrypted" file, navigable and physically separated from the complete digital archive, and which represents a reduced image of the overall archive.
